# EUROPÄISCHE PATENTANMELDUNG

(11) **EP 2 335 809 A1**
(43) Veröffentlichungstag der Anmeldung: **22.06.2011**
(21) Anmeldenummer: 09180264.5
(22) Anmeldetag: 21.12.2009
(51) Int. Cl.: B01D 53/94, B01J 23/10, B01J 23/22, B01J 23/63, B01J 35/00, F01N 3/023, F01N 3/025, F01N 3/035

(54) **Verfahren zum Reinigen eines Dieselabgases**

(71) Anmelder: Kahlert, Bernhard, 5323 Rietheim (CH)
(72) Erfinder: Kahlert, Bernhard, 5323 Rietheim (CH)
(74) Vertreter: Wirnsberger, Gernot

(57) **Zusammenfassung**

Die Erfindung betrifft ein Verfahren zum Reinigen eines Abgases eines Dieselmotors (1), wobei das Abgas in einem Abgastrakt (4) des Dieselmotors durch einen Katalysator (2) und einen stromabwärts nachgeschalteten Partikelfilter (3) zur Bindung von Rußpartikeln geführt wird, wobei der Katalysator (2) und/oder der Partikelfilter (3) beschichtet sind. Erfindungsgemäß ist vorgesehen, dass der Katalysator (2) und/oder der Partikelfilter (3) mit einer Beschichtung versehen sind, die zumindest ein Element aus der Gruppe der Seltenerdmetalle aufweist, das in Form eines Salzes oder Oxides oder elementar vorliegt und der Partikelfilter (3) bei Erreichen eines vorgegebenen Abgasgegendruckes im Abgastrakt (4) aktiv regeneriert wird. Des Weiteren betrifft die Erfindung eine Vorrichtung (5), umfassend einen Dieselmotor (1) und einen daran anschließenden Abgastrakt (4), in dem ein Katalysator (2) und ein stromabwärts nachgeschalteter Partikelfilter (3) zur Bindung von Rußpartikeln vorgesehen sind, wobei der Katalysator (2) und/oder der Partikelfilter (3) beschichtet sind, bei welcher ein erfindungsgemäßes Verfahren angewendet wird.

## Beschreibung

Die Erfindung betrifft ein Verfahren zum Reinigen eines Abgases eines Dieselmotors, wobei das Abgas in einem Abgastrakt des Dieselmotors durch einen Katalysator und einen stromabwärts nachgeschalteten Partikelfilter zur Bindung von Rußpartikeln geführt wird, wobei der Katalysator und/oder der Partikelfilter beschichtet sind.

Des Weiteren betrifft die Erfindung eine Vorrichtung, umfassend einen Dieselmotor und einen daran anschließenden Abgastrakt, in dem ein Katalysator und ein stromabwärts nachgeschalteter Partikelfilter zur Bindung von Rußpartikeln vorgesehen sind, wobei der Katalysator und/oder der Partikelfilter beschichtet sind.

Aus dem Stand der Technik ist es bekannt, zur Reduktion von Rußpartikelemissionen im Abgastrakt eines Dieselmotors eine passiv regenerierende Einrichtung vorzusehen, die als Continuous Regeneration Trap (CRT) bezeichnet wird. Ein CRT-System umfasst einen Katalysator, an dem im Abgas befindliches Stickstoffmonoxid (NO) aufgrund einer am Katalysator angebrachten Beschichtung zu Stickstoffdioxid (NO₂) oxidiert wird, sodass eine Konzentration des im Abgas ohnedies bereits vorliegenden NO₂ erhöht wird. Nachgeschaltet ist ein Partikelfilter, an welchem bzw. in dem Rußpartikel aus dem Abgas gefiltert werden. Die so ausgefilterten und im Partikelfilter gehaltenen Rußpartikel werden mit im Abgas bereits vorhandenem und am Katalysator zusätzlich gebildetem NO₂ umgesetzt, wobei die Rußpartikel verbrannt bzw. umgesetzt werden.

Aus dem Stand der Technik ist es auch bekannt, derartige Systeme gegebenenfalls aktiv zu regenerieren, wenn der Partikelfilter mit Rußpartikeln zu stark beladen ist bzw. ein Abgasgegendruck in nicht gewünschter Weise ansteigt bzw. zu hoch ist. Eine entsprechende Maßnahme ist beispielsweise den Partikelfilter aufzuheizen, wodurch ebenfalls Rußpartikel verbrennt werden können und der Partikelfilter wieder frei wird. Hierzu kann beispielsweise vorgesehen sein, dass der Partikelfilter elektrisch beheizbar ist. Somit kann sichergestellt werden, dass der Partikelfilter nicht vollständig blockierend wirkt bzw. ein maximaler Abgasgegendruck in einer zulässigen Weise eingehalten wird, insbesondere bei niedrigen Betriebstemperaturen.

Bei herkömmlichen CRT-Systemen ist man bestrebt, eine aktive Regeneration des Partikelfilters zu vermeiden. Um dies zu erreichen, wird am Katalysator eine Beschichtung vorgesehen, die besonders geeignet ist, NO₂ zu produzieren, sodass möglichst in allen Betriebsphasen eines Kraftfahrzeuges ein großer Überschuss an NO₂ vorliegt, um die ausgefilterten Rußpartikel zu verbrennen. Ein Problem dabei ist allerdings, dass die Rußpartikel erst ab einer bestimmen Temperatur mit NO₂ umgesetzt werden können. Dies bedeutet, dass insbesondere im Niedriglastbereich (sogenannter Stop-and-Go-Verkehr) und/oder im Kurzzeiteinsatz ein Überschuss an NO₂ vorliegt. Darüber hinaus ist es selbst bei großer Belastung und hohen Arbeitstemperaturen so, dass ein Anteil vom NO₂ so groß ist bzw. so weit erhöht wird, dass zwar die am Partikelfilter ausgefilterten Rußpartikel verbrennen, allerdings NO₂ im deutlichen Überschuss produziert wird bzw. vorhanden ist. Austretendes Abgas ist dann zwar frei von Rußpartikeln, enthält aber giftiges NO₂.

Hier setzt die Erfindung an. Aufgabe der Erfindung ist es, ein Verfahren der eingangs genannten Art anzugeben, bei welchem das Abgas nicht nur frei von Rußpartikeln ist, sondern auch einen im Vergleich mit dem Stand der Technik wesentlich reduzierten NO₂-Gehalt aufweist.

Ein weiteres Ziel der Erfindung ist es, eine Vorrichtung der eingangs genannten Art anzugeben, bei der Abgas besonders rein den Abgastrakt verlässt.

Die verfahrensmäßige Aufgabe der Erfindung wird erfindungsgemäß dadurch gelöst, dass bei einem Verfahren der eingangs genannten Art der Katalysator und/oder der Partikelfilter mit einer Beschichtung versehen sind, die zumindest ein Element aus der Gruppe der Seltenerdmetalle aufweist, das in Form eines Salzes oder Oxides oder elementar vorliegt und der Partikelfilter bei Erreichen eines vorgegebenen Abgasgegendruckes im Abgastrakt aktiv regeneriert wird.

Ein mit der Erfindung erzielter Vorteil ist darin zu sehen, dass im Gegensatz zum Stand der Technik der Katalysator und/oder der Partikelfilter mit einer Beschichtung versehen sind, vorzugsweise der Katalysator oder sowohl der Katalysator als auch der Partikelfilter, die zumindest ein Element aus der Gruppe der Seltenerdmetalle aufweist, was zu einer signifikanten Reduktion des NO₂-Gehaltes im Abgasstrom führt. Dadurch ist sichergestellt, dass ein NO₂-Gehalt verringert wird. Das NO₂ wird somit, soweit dieses nicht mit Rußpartikeln unter Verbrennung derselben umgesetzt wird, in weniger schädliche Gase umgewandelt. Dies trifft unabhängig von einem Betriebszustand zu. Bei hohen Betriebstemperaturen, wenn im Abgas genügend NO₂ vorhanden ist, kann somit ― trotz einer Reduktion des NO₂-Gehaltes im Abgas - eine effektive Verbrennung der Rußpartikel erfolgen. Im Niedriglastbereich bzw. im Bereich einer niedrigen Betriebstemperatur, bei welcher ohnedies keine Verbrennung der Rußpartikel auch bei Überschuss eines NO₂-Gehaltes möglich wäre, ist ebenfalls sichergestellt, dass ein NO₂-Gehalt im ausgestoßenen Abgas gering ist. Für diesen Fall ist vorgesehen, dass bei Erreichen eines vorgegebenen Abgasgegendruckes im Abgastrakt eine aktive Regeneration des Partikelfilters und des gegebenenfalls ebenfalls filternd wirksamen Katalysators erfolgt, insbesondere durch Einspritzen eines Kraftstoffes, der im Abgastrakt verbrennt und dadurch eine Temperatur im Abgastrakt erhöht, sodass eine aktive Regeneration erfolgen kann, wenngleich auch andere Möglichkeiten einer aktiven Regeneration angewendet werden können, beispielsweise Beheizen des Partikelfilters.

Bevorzugt ist vorgesehen, dass der Katalysator zumindest zwei Elemente aus der Gruppe der Seltenerdmetalle aufweist. Gegebenenfalls kann auch der Partikelfilter gleichzeitig und/oder alternativ mit zumindest zwei Elementen aus der Gruppe der Seltenerdmetalle versehen sein. Diesbezüglich kann insbesondere vorgesehen sein, dass die Beschichtung zwei oder mehr Elemente aus der Gruppe der Seltenerdmetalle jeweils in einer Konzentration von 300,0 bis 50000,0 g/m³ aufweist. Interessanterweise wurde festgestellt, dass bei diesen hohen Konzentrationen von zwei oder mehr Seltenerdmetallen in der Beschichtung eine besonders wirksame Reduktion von NO₂ stattfindet.

Besonders bevorzugt ist es, dass die Beschichtung Elemente der Seltenerdmetalle ausgewählt aus der Gruppe bestehend aus Lanthan, Yttrium, Cer, Neodym und/oder Samarium aufweist. Beschichtungen mit diesen Elementen bewirken eine besonders effiziente Reduktion von NO₂.

Darüber hinaus hat es sich bewährt, wenn die Beschichtung Vanadium und/oder Palladium und/oder Rhodium aufweist. Eine Vanadiumkonzentration kann 100,0 bis 10000,0 g/m³ betragen. Eine Konzentration von Rhodium liegt bevorzugt in einem Bereich von 200,0 bis 2000,0 g/m³. Sofern Palladium vorgesehen ist, beträgt dessen Konzentration bevorzugt 150,0 bis 15000,0 g/m³. Obwohl einerseits die Edelmetalle Palladium und/oder Rhodium vorgesehen sein können, ist es andererseits zweckmäßig, dass die Beschichtung im Wesentlichen frei von Platin ist, da sich eine Anwesenheit von Platin als nachteilig in Bezug auf eine NO₂-Reduktion erweisen kann.

Von Vorteil ist es des Weiteren, wenn die Beschichtung Barium und/oder Mangan enthält, wobei diese Elemente beispielsweise in Form eines Oxides oder Salzes vorliegen. Konzentrationen von Barium wie auch Magnesium liegen bevorzugt jeweils im Bereich von 150,0 bis 1500,0 g/m³, wiederum bezogen auf die Elemente. Die Anwesenheit von Barium und/oder Mangan in der Beschichtung bewirkt eine Verringerung der Mindesttemperatur für eine NO₂-Reduktion, sodass bei Anwesenheit eines oder bevorzugt beider Elemente eine große NO₂-Reduktion bereits ab einer Temperatur von 100°C erfolgen kann, was deutlich niedriger ist als bei Einsatz von sogenannter Selective Catalytic Reduction (SCR), die alternativ zur Reduktion eines NO₂-Gehaltes eingesetzt werden könnte. Während SCR-Systeme erst ab einer Temperatur von etwa 200 °C effektiv arbeiten, kann erfindungsgemäß eine NO₂-Reduktion wirksam bereits ab 100 °C erfolgen, also auch im Niedriglastbereich.

Die Beschichtung kann aus mehreren Beschichtungslagen bestehen. Bevorzugt ist vorgesehen, dass die Beschichtung eine untere Beschichtungslage aufweist, auf welcher eine die Seltenerdmetalle enthaltende obere Beschichtungslage abgeschieden ist. Die untere Beschichtungslage ist eine aus dem Stand der Technik bekannte sogenannte Washcoat-Lage, die im Wesentlichen aus Aluminiumoxid besteht. Die obere Beschichtungslage kann, um eine möglichst große Oberfläche zu bilden und damit eine hohe katalytische Wirksamkeit zu erzielen, Partikel aus kristallinem Siliciumdioxid oder einer glasartigen Siliciumdioxid-Phase umfassen, welche Partikel durchschnittlich kleiner als 100 nm sind.

Das Substrat für den Katalysator bzw. den Partikelfilter kann grundsätzlich aus beliebigen Materialien gebildet sein, die aus der Abgasreinigungstechnik bekannt sind. Beispielsweise kann das Substrat des Partikelfilters als Metall- oder Keramikschaum, metallisches Drahtgewirk oder als keramischer Wall-Flow-Filter ausgebildet sein.

Das weitere Ziel der Erfindung wird bei einer Vorrichtung der eingangs genannten Art erreicht, wenn der Katalysator und/oder der Partikelfilter mit einer Beschichtung versehen sind, die zumindest ein Element aus der Gruppe der Seltenerdmetalle aufweist, das in Form eines Salzes oder Oxides oder elementar vorliegt, und eine Einspritzvorrichtung vorgesehen ist, die mit einem Kraftstofftank in Verbindung steht, sodass bei Erreichen eines vorgegebenen Abgasgegendruckes im Abgastrakt Kraftstoff in den Abgastrakt einspritzbar ist, um den Partikelfilter aktiv zu regenerieren.

Ein mit einer erfindungsgemäßen Vorrichtung erzielter Vorteil ist insbesondere darin zu sehen, dass ein den Abgastrakt verlassendes Abgas nicht nur frei von Rußpartikeln sein kann, sondern darüber hinaus auch einen geringen NO₂-Gehalt aufweist. Gleichzeitig kann auch eine Emission von Kohlenwasserstoffen und Kohlenmonoxid merklich verringert werden.

Bevorzugt können ein oder gegebenenfalls auch mehrere Sensoren zur Messung des Abgasgegendruckes im Abgastrakt vorgesehen sein. Dies erlaubt es auf einfache Weise, einen allenfalls erhöhten Abgasgegendruck festzustellen und entsprechende Maßnahmen zur aktiven Regeneration des Partikelfilters zu treffen.

Ebenfalls bevorzugt ist es, dass der Katalysator zumindest zwei Elemente aus der Gruppe der Seltenerdmetalle aufweist, wobei diesbezüglich auf die bereits in Bezug auf ein erfindungsgemäßes Verfahren hingewiesenen Vorteile verwiesen werden kann. Selbiges gilt für eine Vorrichtung, bei welcher die Beschichtung zwei oder mehrere Elemente aus der Gruppe der Seltenerdmetalle jeweils in einer Konzentration von 300,0 bis 50000,0 g/m³ aufweist.

Bevorzugt weist die Beschichtung Elemente der Seltenerdmetalle ausgewählt aus der Gruppe bestehend aus Lanthan, Yttrium, Cer, Neodym und/oder Samarium auf, ebenfalls aufgrund der bereits zuvor erläuterten Vorteile. Selbiges trifft zu, wenn die Beschichtung Palladium und/oder Rhodium in den angegebenen Konzentrationen aufweist. Von Vorteil ist es des Weiteren, wenn die Beschichtung im Wesentlichen frei von Platin ausgebildet ist.

Weitere Merkmale, Vorteile und Wirkungen der Erfindung ergeben sich aus dem nachfolgend dargestellten Ausführungsbeispiel, das anhand der nachfolgenden Beschreibung noch näher dargestellt ist. In den Zeichnungen, in welchen darauf Bezug genommen wird, zeigen:
Fig. 1 eine erfindungsgemäße Vorrichtung;
Fig. 2 einen Ausschnitt der Vorrichtung gemäß Fig. 1;
Fig. 3 ein Diagramm betreffend eine Reduktion eines NO₂-Gehaltes in einem Abgastrakt eines Dieselmotors.

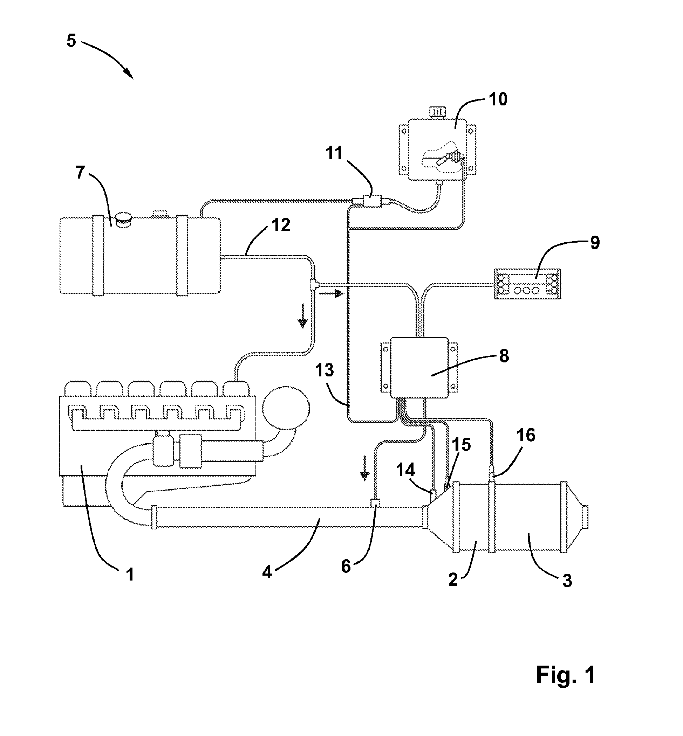

In Fig. 1 ist eine erfindungsgemäße Vorrichtung 5 näher dargestellt. Die Vorrichtung 5 umfasst einen Dieselmotor 1, beispielsweise einen Motor eines Busses. Der Dieselmotor 1 kann aber auch ein Motor eines beliebigen anderen Fahrzeugs oder einer Arbeitsmaschine sein. Der Dieselmotor 1 steht über eine Dieselleitung 12 mit einem Kraftstofftank 7 in Verbindung, sodass Kraftstoff in den Dieselmotor 1 eingespritzt werden kann. Des Weiteren ist ein zusätzlicher Additivtank 10 vorgesehen, der beispielsweise eine Cer aufweisende Lösung beinhaltet. Über eine Dosierpumpe 11 kann je nach Bedarf über eine Leitung die Cer aufweisende Lösung in den Kraftstofftank 7 dosiert werden. Das Additiv dient vornehmlich dazu, was aus dem Stand der Technik bekannt ist, eine Regenerationstemperatur eines Partikelfilters bei aktiver Regeneration zu verringern.

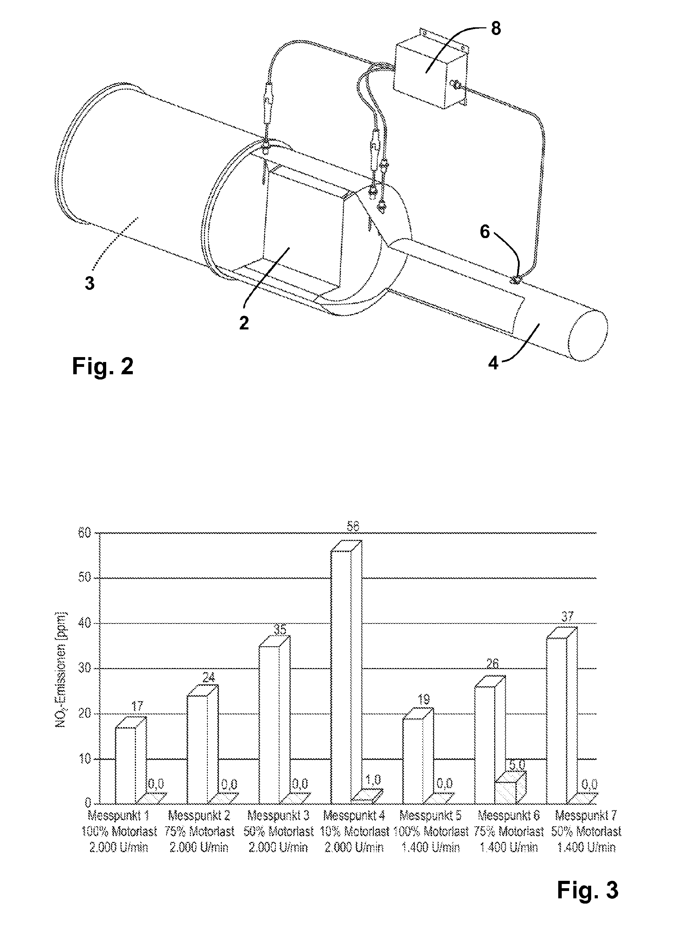

An den Dieselmotor 1 schließt ein Abgastrakt 4 an, der in Fig. 2 in perspektivischer Teilschnittdarstellung bereichsweise noch näher dargestellt ist. Der Abgastrakt 4 weist einen Schalldämpfer auf, in dem ein Katalysator 2 und nachgeschaltet ein Partikelfilter 3 angeordnet sind. Der Katalysator 2 umfasst ein metallisches oder keramisches Substrat, das beschichtet ist. Das Substrat kann beispielsweise eine Metallwickelfolie, ein metallisches Drahtgewirk oder ein metallischer oder keramischer Monolith sein. Der Katalysator 2 ist hinsichtlich einer Porengröße bzw. Durchlässigkeit grundsätzlich so ausgelegt, dass keine Rußpartikel aus dem Abgasstrom gefiltert werden. Dem Katalysator 2 nachgeschaltet ist der Partikelfilter 3, der im Wesentlichen dafür sorgt, die Rußpartikel aus dem Abgasstrom auszufiltern. Der Partikelfilter 3 ist bevorzugt ein keramischer Monolith, beispielsweise auf Basis Siliciumcarbid. Der Partikelfilter 3 ist wie der Katalysator 2 beschichtet und weist eine Beschichtung mit zumindest einem Seltenerdmetall, vorzugsweise zumindest zwei Seltenerdmetallen, auf. Daneben können in der Beschichtung noch weitere Elemente gemäß der nachstehenden Tabelle 1 vorgesehen sein, was sich günstig auswirkt. Die Beschichtung kann je nach Substrat unterschiedlich aufgebaut sein. Möglich ist es z. B. auch, dass die Beschichtung aus mehreren Beschichtungslagen besteht. So kann eine untere Beschichtungslage zur Anbindung an ein Substrat vorgesehen sein, wohingegen eine obere, mit dem Abgas in Kontakt kommende Beschichtungslage die in Tabelle 1 ausgewiesenen Elemente, zumindest aber ein oder zwei Seltenerdmetalle, aufweist. Sind zwei oder mehr Seltenerdmetalle vorgesehen, beträgt eine minimale Summenkonzentration der zumindest zwei Seltenerdmetalle bevorzugt 800,00 g/m³ oder mehr.

**Tabelle 1 - Elemente der Beschichtungen und deren Konzentrationen**

| Element | Form | Gehalt (g/m³) |
|---|---|---|
| Rhodium | elementar | 200,0 bis 2000,0 |
| Palladium | elementar | 150,0 bis 15000,0 |
| Kupfer | Oxid | 100,0 bis 10000,0 |
| Titan | Oxid | 1000,0 bis 150000,0 |
| Lanthan | Oxid | 300,0 bis 20000,0 |
| Vanadium | Oxid | 100,0 bis 10000,0 |
| Cer | Oxid | 500,0 bis 50000,0 |
| Barium | Oxid | 150,0 bis 1500,0 |
| Mangan | Oxid | 150,0 bis 1500,0 |

Des Weiteren können mit Vorteil die Elemente Yttrium mit einem Gehalt von 300,0 bis 10000,0 g/m³, Neodym mit einem Gehalt von 150,0 bis 5000,0 g/m³ und/oder Samarium mit einem Gehalt von 100,0 bis 3000,0 g/m³ vorgesehen sein. Dies ist jedoch nicht zwingend.

Die gegebenenfalls vorgesehene untere Beschichtungslage umfasst bevorzugt Silicium mit einem Gehalt von 50,0 bis 20000,0 g/m³, Aluminium mit einem Gehalt von 50,0 bis 15000,0 g/m³ und Eisen mit einem Gehalt von 600,0 bis 60000,0 g/m³.

Beide Beschichtungslagen werden durch Eintauchen in eine entsprechende Lösung bzw. Suspension und anschließendes Calcinieren bei einer Temperatur von etwa 500 °C erstellt. Dabei erweist es sich als zweckmäßig, um eine katalytisch aktive Oberfläche zu vergrößern, dass in der Lösung bzw. Suspension für die Erstellung der oberen Beschichtungslage kristalline oder amorphe Partikel aus Siliciumdioxid vorliegen, die einen durchschnittlichen Partikeldurchmesser von weniger als 100 nm aufweisen.

Ferner umfasst die Vorrichtung 5 eine Steuereinheit 8 sowie eine Bedienungseinheit 9. Die Steuereinheit 8 wiederum steht mit Temperatursensoren 15, 16 in Verbindung, über welche eine Temperatur vor und nach dem Katalysator 2 gemessen werden kann. Des Weiteren ist mit der Steuereinheit 8 ein Gegendrucksensor 14 verbunden, mit welchem ein Abgasgegendruck im Abgastrakt 4 messbar ist. Schließlich steht die Steuereinheit 8 auch mit der Dieselleitung 12 sowie der Additivleitung 13 in Verbindung und steht über eine weitere Leitung mit einer in den Abgastrakt 4 einmündenden Einspritzeinrichtung 6 in Kontakt.

Die erfindungsgemäße Vorrichtung 5 arbeitet im Einsatz wie folgt: Bei hohen Betriebstemperaturen, beispielsweise im Dauereinsatz eines Kraftfahrzeuges, werden die Rußpartikel des Dieselmotors 1 zu mehr als 95 % durch den Partikelfilter 3 ausgefiltert. Dabei regeneriert der Partikelfilter 3 aufgrund der hohen Betriebstemperaturen passiv, also ohne weitere Hilfe. Durch die vorgesehene Beschichtung des Katalysators 2 wie auch des Partikelfilters 3 wird gleichzeitig als schädlich erachtetes NO₂ reduziert, ohne dass eine Verbrennung von Rußpartikeln beeinträchtigt wäre. Darüber hinaus werden über 99,9 % der Feinstpartikel und über 99 % der Kohlenwasserstoffe ebenfalls in unschädliche bzw. weniger schädliche Komponenten wie Wasser und Kohlendioxid umgewandelt.

Bei niedrigen Betriebstemperaturen von weniger als 250 °C, die beispielsweise bei einem kurzzeitigen Betrieb und/oder im Niedriglastbereich auftreten, regeneriert der Partikelfilter 3 nicht passiv. Dies führt zu einem Anstieg des Abgasgegendruckes im Abgastrakt 4, was mit dem Gegendrucksensor 14 festgestellt wird. Bei Erreichen eines bestimmten Abgasgegendruckes wird über die Einspritzeinrichtung 6 aus dem Kraftstofftank 7 zugeführter Kraftstoff in den Abgastrakt 4 eingespritzt, und zwar vor dem Katalysator 2. Der eingespritzte Kraftstoff verbrennt im Abgastrakt 4, was einen Temperaturanstieg nach sich zieht, sodass der Partikelfilter 3 aktiv regeneriert wird, indem die dort festgehaltenen Rußpartikel verbrennt werden.

Die erfindungsgemäße Vorrichtung 5 vereint eine aktive und eine passive Regeneration, wobei unabhängig von einem Betriebszustand aufgrund der vorgesehenen Beschichtung bzw. Beschichtungen ein NO₂-Gehalt im Abgastrakt wesentlich gesenkt wird, was in Fig. 3 für verschiedene Betriebszustände dargestellt ist. Dabei entsprechen die NO₂-Emissionen den Emissionen vor bzw. nach dem Schalldämpfer bzw. der kombinierten Anordnung von Katalysator 2 und Partikelfilter 3. Darüber hinaus werden in allen Betriebszuständen Rußpartikel in einem Anteil von mehr als 95 % aus dem Abgas eliminiert. Schließlich ist auch ein Anteil von Kohlenwasserstoffen im ausgestoßenen Abgas äußerst gering, sodass eine erfindungsgemäße Vorrichtung 5 unabhängig vom Betriebszustand bzw. von der Belastung und den Betriebstemperaturen ein wirksam gereinigtes Abgas ausstößt.

## Patentansprüche

1. Verfahren zum Reinigen eines Abgases eines Dieselmotors (1), wobei das Abgas in einem Abgastrakt (4) des Dieselmotors (1) durch einen Katalysator (2) und einen stromabwärts nachgeschalteten Partikelfilter (3) zur Bindung von Rußpartikeln geführt wird, wobei der Katalysator (2) und/oder der Partikelfilter (3) beschichtet sind, **dadurch gekennzeichnet, dass** der Katalysator (2) und/oder der Partikelfilter (3) mit einer Beschichtung versehen sind, die zumindest ein Element aus der Gruppe der Seltenerdmetalle aufweist, das in Form eines Salzes oder Oxides oder elementar vorliegt, und der Partikelfilter (3) bei Erreichen eines vorgegebenen Abgasgegendruckes im Abgastrakt (4) aktiv regeneriert wird.

2. Verfahren nach Anspruch 1, **dadurch gekennzeichnet, dass** der Partikelfilter (3) durch Einspritzen eines Kraftstoffes in den Abgastakt (4) vor dem Katalysator (2) regeneriert wird.

3. Verfahren nach Anspruch 1 oder 2, **dadurch gekennzeichnet, dass** der Katalysator (2) zumindest zwei Elemente aus der Gruppe der Seltenerdmetalle aufweist.

4. Verfahren nach einem der Ansprüche 1 bis 3, **dadurch gekennzeichnet, dass** die Beschichtung zwei oder mehr Elemente aus der Gruppe der Seltenerdmetalle jeweils in einer Konzentration von 300,0 bis 50000,0 g/m³ aufweist.

5. Verfahren nach einem der Ansprüche 1 bis 4, **dadurch gekennzeichnet, dass** Beschichtung Elemente der Seltenerdmetalle ausgewählt aus der Gruppe bestehend aus Lanthan, Yttrium, Cer, Neodym und/oder Samarium aufweist.

6. Verfahren nach einem der Ansprüche 1 bis 5, **dadurch gekennzeichnet, dass** die Beschichtung Vanadium und/oder Palladium und/oder Rhodium aufweist.

7. Verfahren nach einem der Ansprüche 1 bis 6, **dadurch gekennzeichnet, dass** die Beschichtung im Wesentlichen frei von Platin ist.

8. Verfahren nach einem der Ansprüche 1 bis 7, **dadurch gekennzeichnet, dass** die Beschichtung eine untere Beschichtungslage aufweist, auf welcher eine die Seltenerdmetalle enthaltende obere Beschichtungslage abgeschieden ist.

9. Verfahren nach Anspruch 8, **dadurch gekennzeichnet, dass** die untere Beschichtungslage im Wesentlichen aus Aluminiumoxid besteht.

10. Verfahren nach Anspruch 8 oder 9, **dadurch gekennzeichnet, dass** die obere Beschichtungslage Partikel aus kristallinem Siliciumoxid oder einer glasartigen Siliciumoxid-Phase umfasst, welche Partikel durchschnittlich kleiner als 100 nm sind.

11. Vorrichtung (5), umfassend einen Dieselmotor (1) und einen daran anschließenden Abgastrakt (4), in dem ein Katalysator (2) und ein stromabwärts nachgeschalteter Partikelfilter (3) zur Bindung von Rußpartikeln vorgesehen sind, wobei der Katalysator (2) und/oder der Partikelfilter (3) beschichtet sind, **dadurch gekennzeichnet, dass** der Katalysator (2) und/oder der Partikelfilter (3) mit einer Beschichtung versehen sind, die zumindest ein Element aus der Gruppe der Seltenerdmetalle aufweist, das in Form eines Salzes oder Oxides oder elementar vorliegt, und eine Einspritzeinrichtung (6) vorgesehen ist, die mit einem Kraftstoffstank (7) in Verbindung steht, sodass bei Erreichen eines vorgegebenen Abgasgegendruckes im Abgastrakt (4) Kraftstoff in den Abgastrakt (4) einspritzbar ist, um den Partikelfilter (3) aktiv zu regenerieren.

12. Vorrichtung (5) nach Anspruch 11, **dadurch gekennzeichnet, dass** ein Sensor (14) zur Messung des Abgasgegendruckes im Abgastrakt (4) vorgesehen ist.

13. Vorrichtung (5) nach Anspruch 11 oder 12, **dadurch gekennzeichnet, dass** der Katalysator (2) zumindest zwei Elemente aus der Gruppe der Seltenerdmetalle aufweist.

14. Vorrichtung (5) nach einem der Ansprüche 11 bis 13, **dadurch gekennzeichnet, dass** die Beschichtung zwei oder mehr Elemente aus der Gruppe der Seltenerdmetalle jeweils in einer Konzentration von 300,0 bis 50000,0 g/m³ aufweist.

15. Vorrichtung (5) nach einem der Ansprüche 11 bis 14, **dadurch gekennzeichnet, dass** Beschichtung Elemente der Seltenerdmetalle ausgewählt aus der Gruppe bestehend aus Lanthan, Yttrium, Cer, Neodym und/oder Samarium aufweist.

16. Vorrichtung (5) nach einem der Ansprüche 11 bis 15, **dadurch gekennzeichnet, dass** die Beschichtung Vanadium und/oder Palladium und/oder Rhodium aufweist.

17. Vorrichtung (5) nach einem der Ansprüche 11 bis 16, **dadurch gekennzeichnet, dass** die Beschichtung im Wesentlichen frei von Platin ist.
